# EUROPEAN PATENT APPLICATION

(11) **EP 2 400 420 A1**
(43) Date of publication of application: **28.12.2011**
(21) Application number: 10305696.6
(22) Date of filing: 28.06.2010
(51) Int. Cl.: G06F 21/00

(54) **Method, system and secure processor for executing a software application**

(71) Applicant: Thomson Licensing, 92130 Issy-les-Moulineaux (FR)
(72) Inventor: Diehl, Eric, 92443, Issy-les-Moulineaux (FR)
(74) Representative: Ruellan-Lemonnier, Brigitte

(57) **Abstract**

A host (110) reads host software code (131) and secure processor software code (132) of an software application (130) and passes the secure processor software code (132) to the secure processor (120) that requests an activation sequence (133) for the software application (130) from a remote server (260). The secure processor (120) receives the activation sequence (133) for the software application (130) and applies it to the secure processor software code (132) to make it executable. The host (110) executes the host software code (131) and calls a procedure of the executable secure processor software code (132) in the secure processor (120), which executes the procedure of the executable secure processor software code (132) to obtain a response to the call that is then returned. The activation sequence (133) is advantageously software code. The invention can enable protection of a plurality of software titles using a single secure processor that is dynamically adapted for each title.

## Description

### TECHNICAL FIELD

The present invention relates generally to computer software and in particular to copy protection of computer software.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

As software distributed on physical media is often subject to illegal duplication, a number of techniques have naturally been developed in order to try and thwart such duplication. These techniques comprise:
- Providing each customer with a unique serial code, such as a random number printed on the physical media to be dialled during the registration phase or a license file that has been crafted for the target host by a server. The main characteristic of this technique is that the protected software compares this value with a reference value in its code. This comparison is of course the target point of attackers.
- Usage of an external device, called dongle, that answers challenges from the software. Wrong answers cause the software to stop its execution. Once again, attackers will attempt to bypass the occurrence of these challenges.
- Verification of the presence of the actual physical media that should have some defined characteristics such as disc rotation speed and access time to predefined sectors that are measured by the software. Two types of attacks are used against this technique. The first type identifies the location of the tests and bypasses them, as in the previous cases. The second attack uses sophisticated virtual drive software such as Alcohol 120% and Virtual Daemon that accurately emulates the physical media.

The Applicant provided another solution in WO 2009/074686. An ancillary secure processor unique for each instance of a piece of software is used and some elements of the code are stored and executed in this processor rather than in the host processor. The absence of this secure processor makes the software impossible to execute. As the secure processor is difficult to clone, the solution is robust against casual hacking.

While this solution works well, it was initially limited to use to protect a unique software program; each title requiring its own secure processor. In some cases, for instance electronic delivery of the title, it would be convenient to have a secure processor that protects several titles. As the software code executed by the secure processor depends on the title, there are two options:
- Load the secure processor with the software codes of several titles in advance. This option is simple but has the drawback that the titles to protect must be known in advance and that these titles must be available.
- Load in real time the software code in the secure processor when executing the title. There are existing solutions that securely load software code in a secure processor, such as Java Card and Sim Tool kit. The code is often provided through digital download. For further details, see K. Markantonakis and K. Mayes, Smart Cards, Tokens, Security and Applications, Springer-Verlag New York Inc., 2008. However, these solutions can still be improved.

It will therefore be appreciated that there is a need for a system that enables protection of a plurality of different software titles, while allowing the user access only to the titles for which she has acquired the rights. In addition, the system should work even when the titles are not known in advance. The present invention provides such a system.

### SUMMARY OF INVENTION

In a first aspect, the invention is directed to a method of executing a software application in a system comprising a host having a processor, a secure processor operatively connected to the host and a remote server. The host reads host software code and secure processor software code of the software application and passes the latter to the secure processor that requests an activation sequence for the software application from the remote server. The secure processor receives the activation sequence for the software application and uses it to make the secure processor software code executable. The host executes the host software code and calls a procedure of the executable secure processor software code in the secure processor, which executes the procedure of the executable secure processor software code to obtain a response to the call that is returned.

In a first preferred embodiment, the secure processor software code is protected and the secure processor unprotects the protected secure processor software code. It is advantageous that the protected secure processor software code is protected by encryption, that the activation sequence is a decryption key, and that the secure processor unprotects the protected secure processor software code by decryption using the decryption key.

In a second preferred embodiment, the secure processor verifies the integrity of the secure processor software code.

In a third preferred embodiment, the activation sequence is selected from the group of: a password, a piece of code that complements the secure processor software code, and a binary code intended to be executed by the secure processor to prepare it for the secure processor software code.

In a fourth preferred embodiment, the secure processor stores the activation sequence in a memory.

In a fifth preferred embodiment, the secure processor is adapted to protect a plurality of software applications.

In a sixth preferred embodiment, the host reads a title identifier for the software application and passes the title identifier to the secure processor that includes the title identifier in the request.

In a second aspect, the invention is directed to a system for executing a software application. The system comprises a host having a processor and a secure processor operatively connected to the host. The host is adapted to read host software code and secure processor software code of the software application; pass the secure processor software code to the secure processor; execute the host software code; and call, when executing the software code, a procedure of the executable secure processor software code in the secure processor. The secure processor is adapted to receive the secure processor software code; request an activation sequence for the software application from a remote server; receive the activation sequence for the software application from the remote server; use the activation sequence to make the secure processor software code executable; execute the procedure of the executable secure processor software code to obtain a response to the call; and return the response to the call.

In a third aspect, the invention is directed to a secure processor in a system for executing a software application. The system further comprises a host having a processor and being operatively connected to the secure processor. The secure processor is adapted to receive secure processor software code from the host; request an activation sequence for the software application from a remote server; receive the activation sequence for the software application from the remote server; apply the activation sequence to the secure processor software code to make it executable; receive a call for a procedure of the secure processor software code from the host; execute the procedure of the executable secure processor software code to obtain a response to the call; and return the response to the call to the host.

### BRIEF DESCRIPTION OF DRAWINGS

Preferred features of the present invention will now be described, by way of non-limiting example, with reference to the accompanying drawings, in which
Figure 1 generally illustrates the system of the present invention;
Figure 2 illustrates a preferred embodiment of the system of the present invention; and
Figure 3 illustrates the generation of a physical copy of an application according to a preferred embodiment of the invention

### DESCRIPTION OF EMBODIMENTS

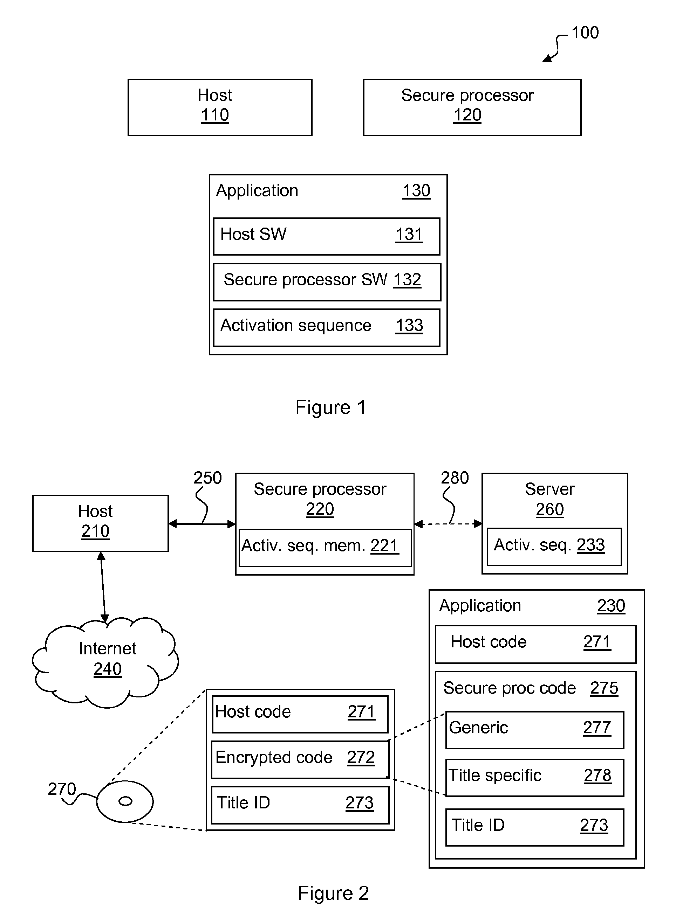

Just as the solution described in WO 2009/074686, the system 100 of the present invention illustrated in Figure 1 comprises two elements: a host 110 and a secure processor 120. The secure processor 120 is capable of protecting a plurality of applications corresponding to software titles, such as a family of applications. Each application 130 comprises three main parts: software code 131 for the host 110 ("host software code"), software code 132 for the secure processor 120 ("secure processor software code") and an activation sequence 133; at least the activation sequence 133 may be delivered to the host 110 separate from the host software code 131. The secure processor software code 132 is preferably both confidentiality and integrity protected, so that only an authorized secure processor 120 is able to execute it. When the host 110 loads an application 130, it keeps the host software code 131 and passes the secure processor software code 132 to the secure processor 120. The host 110 then normally executes the host software code 131.

The secure processor 120 is secure in that at least part of the code that it stores as well as its computations are protected by design so that they are difficult, preferably as near to impossible as can be, to access by unauthorized persons and devices. Common examples of secure processors include smart cards and tamper-proof crypto-processors.

When the secure processor 120 is to execute the received secure processor software code 132, it preferably:
- Unprotects the software code, e.g. by decryption, by permutation of blocks of the software code, or by substitution of certain instructions for other, predetermined, instructions.
- Checks the integrity of the, now unprotected, software code. It should be noted that it is naturally also possible to check the integrity of the protected software code.
- Waits for the correct activation sequence 133. The activation sequence 133 may be generic for this title (or group of titles), or especially crafted to pair a given application 130 and a given secure processor 120. The activation sequence may be securely delivered by a remote server.

It should be noted that the secure processor 120 comprises resident software code (not illustrated) that is used among other things for the unprotection, integrity check, and communication with the host 110.

The activation sequence 133 is applied by the secure processor 120 to the secure processor software code 132 in order to make it usable (i.e. executable); without the correct activation sequence 133, the secure processor software code 132 is preferably not executable. The activation sequence 133 may take many different forms, such as a key to decrypt the secure processor software code 132 (in which case the activation sequence is needed to unprotect the code), a 'password' that is required by the secure processor software code 132 in order to work, a preferably essential piece of software that is missing from the secure processor software code 132 (ranging from one instruction to an entire program part), or even a binary code that should be executed by the secure processor 120 to prepare the secure processor software code 132.

Ideally, the secure processor 120 has the capability to store multiple activation sequences 133, in which case it is advantageous that the secure processor 120 does not need to request an activation sequence 133 that it already possesses.

### Preferred embodiment

In a preferred embodiment, illustrated in Figure 2, the host 210 is a generic computer with access to the Internet 240. The host 210 comprises at least one processor, memory, an Internet interface, etc. The secure processor 220 is a smart card - or smart card type device - comprising memory 221 for storing activation sequences etc., and is connected via, preferably, a USB bus 250 to the host 210. The secure processor 220 is able to open a virtual direct connection 280 to a remote server 260 through the host 210. An objective of the preferred embodiment is for the secure processor 220 to protect a family of applications provided by a software provider.

In the preferred embodiment, the application 230 is stored on a physical optical storage medium 270, such as CD-ROM, DVD-ROM or BluRay disc, as host code 271, encrypted code 272 and a title ID 273. The application 230 comprises the host code 271 and secure processor code 275, which in turn comprises three parts:
- the title ID 273, a unique (non-protected) identifier for the title,
- generic code 277, i.e. code usable by more than one title, and
- title specific code 278, i.e. code specific for a title.

The generic code 277 and the title specific code 278 are generated from the encrypted code 272. The generic code 277 and the title specific code 278 are software code to be executed by the secure processor 220 when executing application 230.

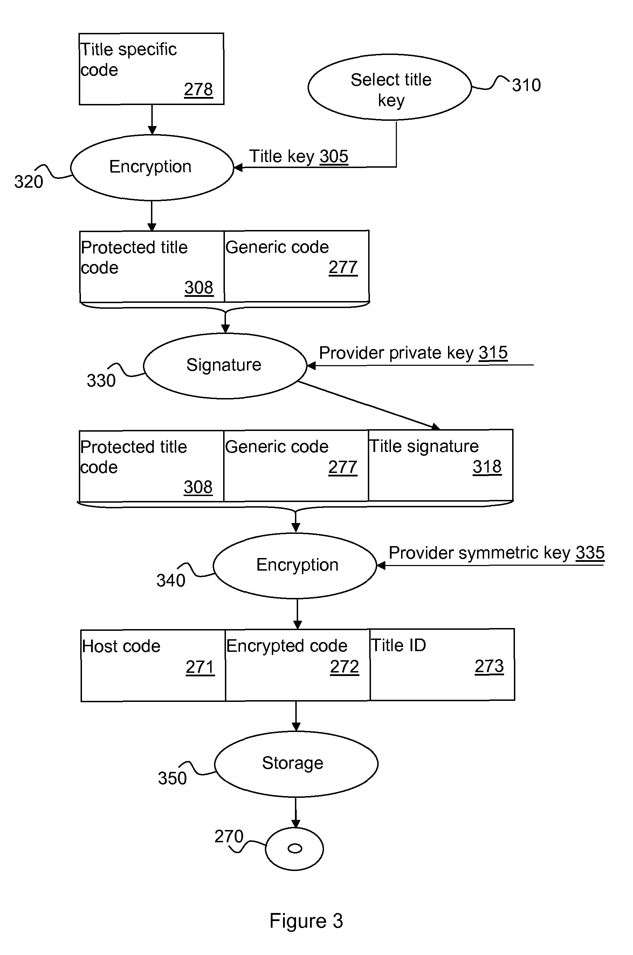

Figure 3 illustrates the generation of a physical copy of an application according to a preferred embodiment of the invention.
- A random 128-bit key title key 305 is chosen 310. The title key 305 and the title ID 273 form the activation sequence.
- The title specific code 278 is AES encrypted 320 using the title key 305, generating protected title code 308.
- A RSA signature is calculated 330, using a 2048-bit Provider Private Key 315, over the generic code 277 and the protected title code 308, generating a title signature 318. Every secure processor 220 (linked to the provider) stores the corresponding 2048-bit Provider Public Key.
- The generic code 277, the protected title code 308 and the title signature 318 are AES encrypted 340 using a 128-bit Provider Symmetric Key 335, generating the encrypted code 272. Every secure processor 220 (linked to the provider) also stores the Provider Symmetric Key 335.
- The host code 271, the encrypted code 272 and the title ID 273 are then stored 350 on the physical copy, such as an optical storage medium 270.

When reading the physical optical storage medium 270, the host 210 provides the secure processor 220 with the encrypted code 272 and the title ID 273.

The secure processor 220 then:
- Decrypts the encrypted code 272 using its Provider Symmetric Key 335.
- Verifies, using its Provider Public Key, that the title signature 318 is correct.
- In case of positive signature verification, verifies if its activation sequence memory 221 stores an activation sequence 233 corresponding to the title ID 273.
   o If the activation sequence memory 221 does not store such an activation sequence 233, the secure processor 220 requests one from the server 260. This preferably done using any suitable prior art Secure Authenticated Channel (SAC) using an individual unique key pair in the secure processor.
   o Upon reception of the requested activation sequence 233, the secure processor 220 stores it securely in the activation sequence memory 221.
- Decrypts the title specific code 278 using the title key 305 provided by the activation sequence 233.
- Executes the code formed by the generic code 277 and the title specific code 278.

When the host 210 executes the host code 271, it calls procedures in the generic code 277 and the title specific code 278 in the secure processor 220, which executes the requested procedures and returns the corresponding responses.

If the secure processor 220 is absent, if it contains the wrong code (e.g. only code corresponding to another title), or if it lacks the correct activation sequence 233, then either no answer is returned or the returned answer is incorrect and the execution of the title will not work properly.

It will be appreciated that the preferred embodiment only supports one software provider. The skilled person will appreciate that it is straightforward to extend the idea to several providers. Each provider would have its own Provider Symmetric Key, and its own key pair Provider Public Key and Provider Private Key. An application would comprise additional information identifying the issuing provider.

The skilled person will appreciate that the present invention can protect a family of software or a plurality of software programs. For instance, the secure processor of the invention, that is dynamically adapted to protect each title, could protect any software provided by a given editor or distributor. This possibility can be more user friendly than the use of one token per software.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of executing a software application (130) in a system (100) comprising a host (110) having a processor, a secure processor (120) operatively connected to the host (110) and a remote server (260), the method comprising the steps of:
reading by the host (110) host software code (131) and secure processor software code (132) of the software application (130);
passing the secure processor software code (132) to the secure processor (120);
requesting, by the secure processor (120), an activation sequence (133) for the software application (130) from the remote server (260);
receiving, by the secure processor (120), the activation sequence (133) for the software application (130) from the remote server (260);
using, by the secure processor (120), the activation sequence (133) to make the secure processor software code (132) executable;
executing, by the host (110), the host software code (131);
calling, by the host software code (131) executing on the host (110), a procedure of the executable secure processor software code (132) in the secure processor (120);
executing, by the secure processor (120), the procedure of the executable secure processor software code (132) to obtain a response to the call; and
returning, by the secure processor (120), the response to the call.

2. The method of claim 1, wherein the secure processor software code (132) is protected and the method further comprises the step of unprotecting, by the secure processor (120), the protected secure processor software code (132).

3. The method of claim 2, wherein the protected secure processor software code (132) is protected by encryption, the activation sequence (133) is a decryption key, and the secure processor (120) unprotects the protected secure processor software code by decryption using the decryption key.

4. The method of claim 1, further comprising the step of verifying, by the secure processor (120), the integrity of the secure processor software code (132).

5. The method of claim 1, wherein the activation sequence (133) is selected from the group of: a password, a piece of code that complements the secure processor software code (132), and a binary code intended to be executed by the secure processor to prepare it for the secure processor software code (132).

6. The method of claim 1, further comprising the step of storing, by the secure processor (120) the activation sequence (133) in a memory (221).

7. The method of claim 1, wherein the secure processor (120) is adapted to protect a plurality of software applications.

8. The method of claim 1, further comprising the steps of:
reading, by the host (110), a title identifier (273) for the software application (130); and
passing, by the host (110), the title identifier (273) to the secure processor (120); and
wherein the secure processor (120) includes the title identifier (273) in the request.

9. A system (100) for executing a software application (130), the system (100) comprising a host (110) having a processor and a secure processor (120) operatively connected to the host (110), wherein:
the host (110) is adapted to:
read host software code (131) and secure processor software code (132) of the software application (130);
pass the secure processor software code (132) to the secure processor (120);
execute the host software code (131); and
call, when executing the host software code (131), a procedure of the executable secure processor software code (132) in the secure processor (120); and the secure processor (120) is adapted to:
receive the secure processor software code (132);
request an activation sequence (133) for the software application (130) from a remote server (260);
receive the activation sequence (133) for the software application (130) from the remote server (260);
use the activation sequence (133) to make the secure processor software code (132) executable;
execute the procedure of the executable secure processor software code (132) to obtain a response to the call; and
return the response to the call.

10. A secure processor (120) in a system (100) for executing a software application (130), the system (100) further comprising a host (110) having a processor and being operatively connected to the secure processor (120), the secure processor (120) being adapted to:
receive secure processor software code (132) from the host (110);
request an activation sequence (133) for the software application (130) from a remote server (260);
receive the activation sequence (133) for the software application (130) from the remote server (260);
use the activation sequence (133) to make the secure processor software code (132) executable;
receive a call for a procedure of the secure processor software code (132) from the host (110);
execute the procedure of the executable secure processor software code (132) to obtain a response to the call; and
return the response to the call to the host (110).
